# EUROPÄISCHE PATENTANMELDUNG

(11) **EP 1 897 761 A2**
(43) Veröffentlichungstag der Anmeldung: **12.03.2008**
(21) Anmeldenummer: 07015435.6
(22) Anmeldetag: 07.08.2007
(51) Int. Cl.: B60R 21/13

(54) **Kraftfahrzeug mit einer Überrollbügelanordnung**

(30) Priorität: 08.09.2006 DE 102006042284
(71) Anmelder: Dr.Ing. h.c. F. Porsche Aktiengesellschaft, 70435 Stuttgart (DE)
(72) Erfinder: Fröschle, Mathias, 73760 Ostfildern (DE); Schulzki, Markus, 71638 Ludwigsburg (DE)

(57) **Zusammenfassung**

Kraftfahrzeug mit einer Überrollbügelanordnung, welche wenigstens einen U-förmigen Überrollbügel (11), eine Querstrebe (12) und ein Verbindungselement (20) mit einer Aufnahmeöffnung (21) aufweist, die ein Ende des Überrollbügels (11) aufnimmt. Dabei kann das Verbindungselement (20) sowohl mit der äußeren, als auch mit der inneren Karosseriewand, welche im Wesentlichen vertikal und/ oder horizontal angeordnet ist, lösbar oder unlösbar verbunden sein. Ferner ist vorgesehen, an diesem Verbindungselement (20) Lagerstellen anzuordnen, an welchen ein faltbares Verdeck und/ oder ein Gurtumlenkhebel (32) befestigt werden können.

## Beschreibung

Die vorliegende Erfindung betrifft ein Kraftfahrzeug mit einer Überrollbügelanordnung, welche wenigstens einen Überrollbügel, eine Querstrebe und ein Verbindungselement mit einer Aufnahmeöffnung umfasst, in der ein Ende des Überrollbügels aufgenommen ist. Ferner betrifft die vorliegende Erfindung ein Verbindungselement für eine Überrollbügelanordnung im Kraftfahrzeug.

Bekannte Überrollbügelanordnungen in Kraftfahrzeugen umfassen üblicherweise eine im Wesentlichen horizontale und parallel zur Fahrtzeugquerachse angeordnete Querstrebe sowie zwei meist U-förmige Überrollbügel. Die Überrollbügel sind hierbei mit dem der Fahrzeugmitte zugewandten Ende an der Querstrebe befestigt und mit ihrem zweiten Ende, welches sich zur Fahrzeugaußenseite hin erstreckt, über Verbindungseinrichtungen mit der Fahrzeugkarosserie verbunden. Die Querstrebe ist bevorzugt ebenfalls mittels dieser Verbindungseinrichtung am Fahrzeugaufbau befestigt.

Für solche Überrollbügelanordnungen sind verschiedene Ausführungsformen bekannt. So beschreibt beispielsweise das deutsche Patent DE 102 18 701 C1 Befestigungsfüße aus Leichtmetallguss, an denen die Querstrebe auf an den Befestigungsfüßen einstückig ausgebildeten Eingriffsabschnitten aufgesteckt und daran befestigt ist. Das der Fahrzeugaußenseite zugewandte Ende eines Überrollbügels ist dabei separat an der, der Querstrebe gegenüberliegenden Seite des Befestigungsfußes verschraubt. Bei dieser Ausführungsform ist eine Verdecklagerung, in der ein faltbares Fahrzeugverdeck beweglich angelenkt ist, in den Guss-Befestigungsfuß integriert.

Die europäische Patentanmeldung EP 1 547 874 A1 beschreibt eine Überrollbügelanordnung, bei der die Enden der Überrollbügel, welche der Fahrzeugaußenseite zugewandt sind, sich deutlich über die Ebene der Querstrebe nach unten erstrecken. Diese verlängerten Enden des Überrollbügels durchsetzen die Querstrebe und sind mit dieser verschraubt. An dieser Verschraubung sind Laschen angebracht, welche den Querstreben-Überrollbügel-Befestigungsknoten mit einem Befestigungselement, welches wiederum an der seitlichen Karosserieinnenwand befestigt ist, verbinden. Zusätzlich sind die nach unten verlängerten Enden der Überrollbügel mit einer horizontal verlaufenden Karosseriewand verschraubt und im Bereich zwischen der Querstrebe und der horizontalen Karosseriewand ebenfalls über eine Lasche mit der Karosserieaußenwand verbunden. Bei dieser Überrollbügelanordnung weist das aus einem Umformteil bestehende Befestigungselement an der Karosserieaußenwand eine Verlängerung auf, an der Bolzen und andere Befestigungselemente zur Lagerung des Verdecks angebracht sind.

Der Kraftfluss zwischen den Elementen der Überrollbügelanordnung ist bei diesen bekannten Systemen häufig nicht so geführt, dass eine optimale Belastbarkeit der für die Fahrzeugsicherheit wesentlichen Anbindung der Überrollbügelanordnung an den Fahrzeugaufbau erreicht wird. Dies beeinträchtigt ferner die Festigkeit des Fahrzeugaufbaus.

Weiterhin ist es beispielsweise aus der deutschen Offenlegungsschrift DE 199 31 224 A1 bekannt, Deformationselemente in Überrollbügelanordnungen einzusetzen, um deren Fähigkeit zur Kraftaufnahme zu verbessern, wodurch ein zusätzlicher Montageaufwand geschaffen wird.

Die vorliegende Erfindung stellt sich die Aufgabe, ein Kraftfahrzeug mit einer verbesserten Überrollbügelanordnung zur Verfügung zu stellen, welche insbesondere die Festigkeit des Fahrzeugaufbaus erhöht.

Diese Aufgabe wird erfindungsgemäß durch den Gegenstand des Anspruchs 1 bzw. des Anspruchs 4 gelöst. Vorteilhafte Weiterbildungen sind Gegenstand der Unteransprüche.

Bei einem Kraftfahrzeug mit Überrollbügelanordnung nach einer Ausführung der vorliegenden Erfindung umfassen die Verbindungselemente jeweils eine Aufnahmeöffnung, in welcher sowohl ein Ende eines Überrollbügels als auch ein Ende der Querstrebe aufgenommen werden. Die Querstrebe kann dabei beispielsweise aus einem üblichen rohrförmigen Halbzeug, als Umformteil oder vorzugsweise als Strangpressprofil hergestellt sein. Vorteilig bei einer gemeinsamen Lagerung der Enden von Querstrebe und Überrollbügel ist die Einbindung der beiden Elemente in einen gemeinsamen Kraftfluss, wodurch erreicht wird, dass Kräfte, welche von außen auf eines der beiden Elemente wirken, auch vom jeweils anderen Element aufgenommen werden können, wodurch eine deutlich erhöhte Fahrzeugsteifigkeit erzielt wird.

Die Aufnahmeöffnung im Verbindungselement ist dabei bevorzugt nach oben und in Richtung zur Fahrzeugmitte hin offen gestaltet. Damit ist die Aufnahmeöffnung jeweils in Richtung der aufzunehmenden Elemente, der Enden des Überrollbügels sowie der Querstrebe hin geöffnet. In Richtung zur Fahrzeugseite und zum Fahrzeugboden hin ist die Aufnahmeöffnung geschlossen. Damit werden eingeleitete Kräfte praktisch innerhalb des Verbindungselements aufgenommen. Im Fahrbetrieb und im Falle eines Aufpralls treten keine kritischen Kräfte in senkrechter Richtung vom Fahrzeugboden wegweisend auf, die einen Formschluss in dieser Richtung erfordern. Aufgrund der spiegelbildlichen Anordnung der erfindungsgemäßen Überrollbügelanordnung werden die Kräfte, welche horizontal entlang der Fahrzeugquerachse in Richtung zur Fahrzeugmitte hin wirken, auf der gegenüberliegenden Fahrzeugseite in den Fahrzeugaufbau eingeleitet.

Das eine Ende des Überrollbügels sowie das der Querstrebe sind dabei bevorzugt so ausgeführt, dass sie von der Aufnahmeöffnung des Verbindungselements im Wesentlichen formschlüssig und vorteilhafterweise als eine Einheit aufgenommen werden. Eine solche Gestaltung vereinfacht die Montage der Überrollbügelanordnung im Kraftfahrzeug und ermöglicht eine kraftflussgerechte Einleitung auftretender Kräfte über Kontaktflächen in das Verbindungselement. Auch die Übertragung von Kräften zwischen den Enden des Überrollbügels sowie der Querstrebe erfolgt über eine Abstützung an Bauteilkanten bzw. - flächen.

Zur Sicherung der Elemente in der Aufnahmeöffnung ist es auch möglich, lösbare Befestigungen vorzusehen. Dies erleichtert die Montage und ermöglicht insbesondere einen einfacheren nachträglichen Austausch beschädigter Bauteile. Gleichermaßen können auch unlösbare Befestigungen vorgesehen sein. Diese verringern vorteilhaft die Zahl der Montageschritte und der hierbei benötigten Bauteile, verringern das Gewicht der Anordnung und erhöhen die Festigkeit der Verbindung. Durch die Anordnung (von einer Fahrzeugseite zur anderen Fahrzeugseite) Verbindungselement - Überrollbügelende - Querstrebe - Überrollbügelende - Verbindungselement entsteht so in Fahrzeugquerrichtung eine sehr steife Anordnung, welche, als Strukturbauteil im Rohbau montiert, die Rohbausteifigkeit deutlich erhöht. Dabei dienen die Enden der Überrollbügel, welche bevorzugt rohrförmig sind, als Deformationselemente, welche beispielsweise bei einem Seitenaufprall auftretende Querkräfte aufnehmen. Aufgrund der zusätzlichen Einfassung der Enden der Überrollbügel durch die Aufnahmeöffnung, welche zusätzlich versteifend wirkt, ist eine weitere Vernichtung von Energie möglich. Durch die geschlossene Gestaltung der Aufnahmeöffnung in Richtung der Fahrzeuglängsachse, können vom Verbindungselement auch relativ hohe Kräfte, welche schräg zur oder in Richtung der Fahrzeuglängsachse eingeleitet werden, aufgenommen werden.

Auch die Kräfte, die über einen Überrollbügel eingeleitet werden, werden von dieser kompakten, von Karosseriewand zu Karosseriewand reichenden, Überrollbügelanordnung gegenüber bekannten Überrollbügelanordnungen verbessert aufgenommen. Vertikale Kräfte auf den Überrollbügel werden dabei direkt von dem bevorzugt flächig in der Aufnahmeöffnung aufgenommenen Überrolibügelquerschnitt auf das Verbindungselement und somit in den Fahrzeugaufbau übertragen. Schräg auf den Überrollbügel aufgebrachte Kräfte werden in Abhängigkeit der Kraftrichtung sowohl von der Querstrebe als auch vom Verbindungselement aufgenommen und in den Fahrzeugaufbau eingeleitet.

Aufgrund des vereinfachten Aufbaus und des damit fehlenden Erfordernisses für kraftübertragende Befestigungselemente kann die Montage, die großteils bevorzugt durch Steckverbindung der einzelnen Elemente der Überrollbügelanordnung erfolgt, sehr vereinfacht durchgeführt werden.

Zur Lösung der beschriebenen Aufgabenstellung ist es vorteilhaft, wenn sich das Verbindungselement in einer weiteren bevorzugten Ausführungsform an einer äußeren und einer inneren Karosseriewand des Fahrzeugs abstützt. Dabei kann die innere Karosseriewand, entsprechend dem vorliegenden Karosserieaufbau, im Wesentlichen vertikal und/ oder im Wesentlichen horizontal angeordnet sein. Insbesondere kann es sich um das Dach eines Motorraums handeln.

Durch die Anbindung des Verbindungselements sowohl an der äußeren als auch an einer inneren Karosseriewand wird eine besonders steife und feste Verbindung erreicht, in der in das Verbindungselement eingeleitete Kräfte, insbesondere Vertikalkräfte, vorteilhaft in die Fahrzeugkarosserie eingeleitet werden können. Hierzu kann einerseits die durch die doppelte Anbindung vergrößerte Verbindungsfläche beitragen. Gleichermaßen können die Verbindungen mit der äußeren und inneren Karosseriewand unterschiedlich orientiert sein und so optimal verschieden gerichtete Kräfte aufnehmen. Sofern beispielsweise die innere Karosseriewand im Wesentlichen horizontal ist, kann sich das Verbindungselement in vertikaler Richtung auf ihr abstützen, so dass die Verbindung mit der äußeren Karosseriewand, die meist im Wesentlichen vertikal ist, nur geringe Schubkräfte aufnimmt. Auch ein Zug in horizontaler Fahrzeuglängsrichtung, wie er beispielsweise beim Öffnen eines am Verbindungselement angelenkten Verdecks auftritt, wird vorteilhaft über die Verbindung mit einer im Wesentlichen horizontalen inneren Karosseriewand aufgenommen und verringert in der äußeren Karosseriewand auftretende Schubkräfte.

Die Anbringung des Verbindungselements an diesen zwei Karosseriewänden kann erfindungsgemäß jeweils sowohl lösbar als auch unlösbar ausgeführt sein. Dabei werden für lösbare Verbindungen bevorzugt Befestigungselemente wie Schrauben, Nieten, Bolzen oder Schnappverbindungen eingesetzt, für unlösbare Verbindungen vorzugsweise Verbindungstechniken wie Schweißen, Löten, Kleben oder unlösbare Umformverfahren.

Besonders bevorzugt wird ein Großteil der vom Verbindungselement über die Karosseriewände in den Fahrzeugaufbau eingebrachten Kräfte formschlüssig übertragen. Dabei ist es besonders vorteilhaft, wenn sich das Verbindungselement auf einer horizontalen Karosseriewand abstützen kann, beispielsweise im Fall eines Fahrzeugüberschlags. Auch an im Wesentlichen vertikalen Karosseriewänden kann sich das Verbindungselement an bevorzugt in diesen Wänden integrierten, die Krafteinleitung verbessernden, Vorsprüngen abstützen.

Besonders vorteilhaft ist es ebenfalls, das Verdecklager in das Verbindungselement zu integrieren. Durch die beschriebene verbesserte Kraftübertragung vom Verbindungselement auf die Karosseriewände als auch in die Überrollbügelanordnung können sowohl die ins Verdecklager eingeleiteten Querkräfte als insbesondere auch die beim Öffnen und Schließen sehr hohen dort angreifenden Zugkräfte aufgenommen und in den Fahrzeugaufbau weitergeleitet werden.

Vorzugsweise ist es aufgrund der vorher genannten Gründe ebenso zweckmäßig, einen in diesem Bereich der Fahrzeugkarosserie angeordneten Gurtumlenkhebel ebenfalls am Verbindungselement anzuordnen. Gerade für den Insassenschutz ist die optimierte Krafteinleitung vom Gurtumlenkhebel über das Verbindungselement in den Fahrzeugaufbau, welche durch die im erfindungsgemäßen Kraftfahrzeug angeordnete Überrollbügelanordnung zur Verfügung gestellt wird, äußerst vorteilhaft.

Um die vielfältigen Anforderungen, welche die vorbeschriebenen Aufgaben und Ausgestaltungen an das Verbindungselement stellen zu erfüllen, ist das Verbindungselement vorzugsweise als Schweiß-, Schmiede- oder Umformkonstruktionen ausgeführt. Besonders bevorzugt ist es jedoch, das Verbindungselement als Gussteil herzustellen, da Gussteile eine sehr hohe mechanische Festigkeit aufweisen und dabei die für solche Verbindungselemente erforderlichen gestalterischen Vorteile bieten.

In einer besonders bevorzugten Ausführungsform stützen sich die in die Uberrollbügelanordnung integrierten Verbindungselemente sowohl an einer inneren als auch an einer äußeren Karosseriewand ab. Dadurch ergänzen sich die vorstehend genannten erfindungsgemäßen Vorteile, wodurch eine im Vergleich zum bisher bekannten Stand der Technik ein deutlich verbessertes Kraftfahrzeug mit Überrollbügelanordnung geschaffen wird.

Besonders vorteilhaft an dieser Ausführungsform des erfindungsgemäßen Kraftfahrzeugs mit Überrollbügelanordnung ist eine verbesserte Aufnahme, Weiterleitung in den Fahrzeugaufbau und erforderlichenfalls sogar Vernichtung von Kräften, welche einerseits über die Überrollbügel oder andererseits, wie beispielsweise bei einem Seitenaufprall, über die gegenüberliegende Fahrzeugseite in den Fahrzeugaufbau eingeleitet werden. Die erfindungsgemäße Überrollbügelanordnung, welche im Fahrzeug direkt hinter den Rückenlehnen der Fahrzeuginsassen integriert sein kann, bietet damit eine deutlich erhöhte Querversteifung offener Fahrzeuge.

Die integrierte Verdecklagerung im erfindungsgemäßen Kraftfahrzeug leitet die über das Verdeck auf das Fahrzeug übertragenen Kräfte ebenso, wie Kräfte aus dem Gurtumlenkhebel optimiert in den Fahrzeugaufbau ein und erhöht damit die Sicherheit der Fahrzeuginsassen.

Ein Fahrzeugverdeck ist, abgesehen von der Verriegelung an der Windschutzscheibe, nur an der Verdecklagerung fest mit dem Fahrzeug verbunden. Daher ist es besonders vorteilhaft, Querkräfte, welche das Verdeck wirken, die schon bei geringen Seitenwindgeschwindigkeiten relativ hoch sein können, von den Verdecklagerstellen im Bereich der Überrollbügelanordnung aufzunehmen. Durch die Integration der Verdecklagerung in den Kraftfluss der Überrollbügelanordnung werden folglich vorhandene Potenziale zur Stabilisierung des Verdecklagers ausgeschöpft.

Die höchsten Kräfte werden jedoch beim Öffnen und Schließen des Verdecks während der Fahrt eingeleitet in das Verdecklager. Aufgrund der großen im Fahrtwind stehenden Fläche wirken dabei sehr hohe Zugkräfte an der Verdecklagerung. Weiterhin ermöglicht die Integration der Verdecklagerung in die Überrollbügelanordnung des erfindungsgemäßen Kraftfahrzeugs eine vereinfachte Montage der Verdecklagerung sowie des Verdecks am Verdecklager.

Auch insgesamt zeichnet sich diese besonders bevorzugte Ausführungsform durch eine deutliche Verbesserung der Montagefreundlichkeit aller Komponenten der Überrollbügelanordnung aus. Dies gilt sowohl in Hinblick auf die Aufnahme der Enden von Überrollbügel und Querstrebe im Verbindungselement, als auch bezüglich der kraftübertragenden Befestigung des Verbindungselements an der Fahrzeugkarosserie, welche vorzugsweise vor allem im Bereich innerer Karosseriewände zumindest teilweise formschlüssig erfolgt. Der hieraus folgende Wegfall zusätzlich erforderlicher Befestigungselemente erweist sich vorteilig für das Fahrzeuggewicht und ebenfalls für die Montagekosten des Fahrzeugs. Dabei entfallen nicht nur die Kosten für die Befestigungselemente sondern die Kosten für einen Einbau dieser in das Fahrzeug. Besonders vorteilhaft erweist sich der Kraftfluss innerhalb der Überrollbügelanordnung gemäß der besonders bevorzugten Ausführungsform und die Übertragung von eingeleiteten Kräften in den Fahrzeugaufbau. Als weiterer Vorteil der besonders bevorzugten Ausführungsform ist der aufgrund der einfachen und wirkungsvollen Gestaltung verminderte Platzbedarf der Überrollbügelanordnung im Fahrzeug anzuführen.

Als besonderer Vorteil des erfindungsgemäßen Kraftfahrzeugs ist der optimierte Kraftfluss zwischen den Elementen der Überrollbügelanordnung hervorzuheben.
Hierdurch wird die Belastbarkeit der für die Fahrzeugsicherheit, insbesondere die Überschlagsicherheit, wie auch für die Fahrzeugsteifigkeit, insbesondere die Quersteifigkeit, wesentlichen Überrollbügel- bzw. Querstrebenanbindung erheblich verbessert. Die Überrollbügelanordnung des erfindungsgemäßen Kraftfahrzeugs vermeidet ferner jegliche Unterbrechung des Kraftflusses oder festigkeitsvermindernde Kraftverläufe, welche bei bekannten Systemen aufgrund einer getrennten Lagerung der Querstrebe und des Überrollbügels die Aufnahmefähigkeit eingeleiteter Kräfte reduziert.

Ein weiterer Vorteil des erfindungsgemäßen Fahrzeugs ist die Integration der Überrollbügelanordnung, welche direkt hinter den Rückenlehnen der Fahrzeuginsassen angeordnet ist, als zusätzliche Querversteifung in das Sicherheitskonzept offener Fahrzeuge. Aufgrund der fehlenden B-Säule dieser Fahrzeuge weisen diese in dem Bereich hinter den Fahrzeugtüren eine verminderte Quersteifigkeit auf, welche durch den Einsatz der Überrollbügelanordnung deutlich verbessert wird.

Weitere Vorteile, Merkmale und Anwendungsmöglichkeiten der vorliegenden Erfindung ergeben sich aus der nachfolgenden Beschreibung in Zusammenhang mit den Figuren. Es zeigt:
- Fig. 1: eine räumliche Ansicht der erfindungsgemäßen Überrollbügelanordnung in einem Kraftfahrzeug,
- Fig. 2: eine räumliche Ansicht eines Verbindungselements in Richtung Fahrzeugheck gesehen,
- Fig. 3: eine Schnittdarstellung des Verbindungselements entlang der Schnittlinie III - III in Fig. 2 durch die Aufnahmeöffnung mit den darin angeordneten Enden des Überrollbügels und der Querstrebe und
- Fig. 4: eine räumliche Ansicht eines Verbindungselements in Richtung zur Fahrzeugfront gesehen.

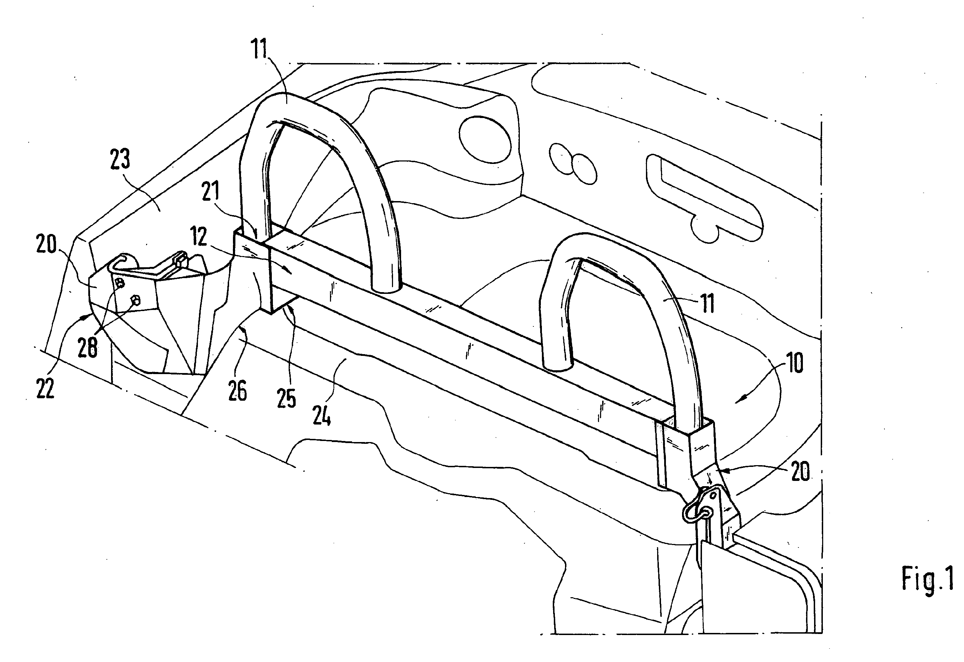

Fig. 1 zeigt eine räumliche Ansicht der erfindungsgemäßen Überrollbügelanordnung 10, welche in ein Kraftfahrzeug eingebaut dargestellt ist. Die Überrollbügelanordnung 10 umfasst dabei zwei U-förmige Überrollbügel 11, eine Querstrebe 12 sowie ein Verbindungselement 20 mit einer Aufnahmeöffnung 21. In dieser Aufnahmeöffnung 21 ist jeweils ein Ende eines Überrollbügels 11 sowie ein Ende der Querstrebe 12 aufgenommen. Die Verbindungselemente 20, welche zu beiden Seiten zwischen der Querstrebe und der Karosserieinnenwand angeordnet sind, sind spiegelbildlich ausgeführt. An der Kontaktfläche 22 ist das Verbindungselement 20 an der äußeren Karosseriewand 23 befestigt. In der beispielhaften Ausführungsform ist das Verbindungselement 20 einerseits formschlüssig, zusätzlich jedoch mittels einer Verschraubung 28 an der äußeren Karosseriewand befestigt.

An der inneren Karosseriewand, welche bei der beispielhaften Ausführungsform vom Dach des Motorraums gebildet wird, stützt sich das Verbindungselement 20 horizontal über die Kontaktfläche 25 und zusätzlich vertikal über die Kontaktfläche 26 ab. Bei der gezeigten Ausführungsform sind keine weiteren Befestigungselemente an den Kontaktflächen 25 und 26 angebracht.

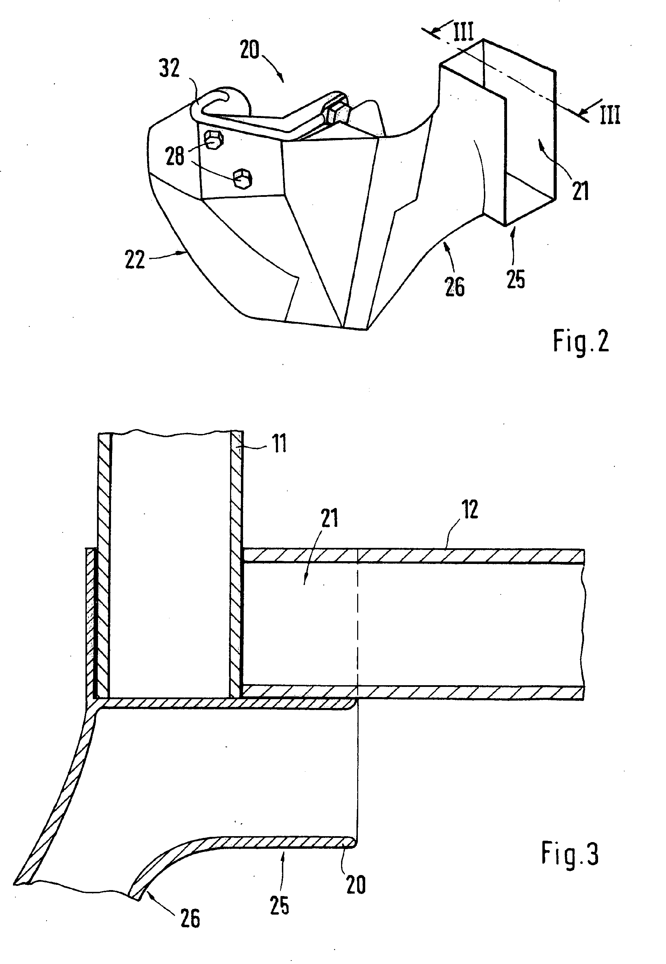

Die Enden der Überrollbügel 11, welche der Fahrzeuglängsmittelachse zugewandt sind, sind in geeigneter Weise in oder an der Querstrebe befestigt. Die Enden der Überrollbügel, welche in Richtung der äußeren Karosseriewände weisen, werden in der Aufnahmeöffnung 21 des Verbindungselements 20, welches in Fig. 2 dargestellt ist, aufgenommen.

Fig. 3 zeigt einen Schnitt durch das Verbindungselement 20 entlang der Schnittlinie III - III in Fig. 2 durch die Aufnahmeöffnung 21 und den sich darin befindenden Enden des Überrollbügels 11 sowie der Querstrebe 12. Die Querstrebe 12 kann sich bei dieser beispielhaften Anordnung bei einer Belastung in Längsrichtung (quer zur Fahrzeuglängsachse) über das Ende des Überrollbügels 11 im Verbindungselement und somit an den äußeren Karosseriewänden 23 abstützen. Dabei wird auch die Querstabilität des rohrförmigen Endes des Überrollbügels 11, das zusätzlich von der Aufnahmeöffnung umfangen ist, genutzt. Bei einer Belastung, bei der Kräfte in Fahrzeuglängsrichtung oder in vertikaler Richtung auf das Fahrzeug auftreten, werden diese direkt oder teilweise über das Ende des Überrollbügels 11 in das Verbindungselement und damit auf die Fahrzeugkarosserie übertragen. Sehr hohe eingeleitete Kräfte führen dabei zur Deformation des Querschnitts des Überrollbügels 11, wobei die Aufnahmeöffnung 21 des Verbindungselements 20 ebenfalls eine Deformation erfährt.

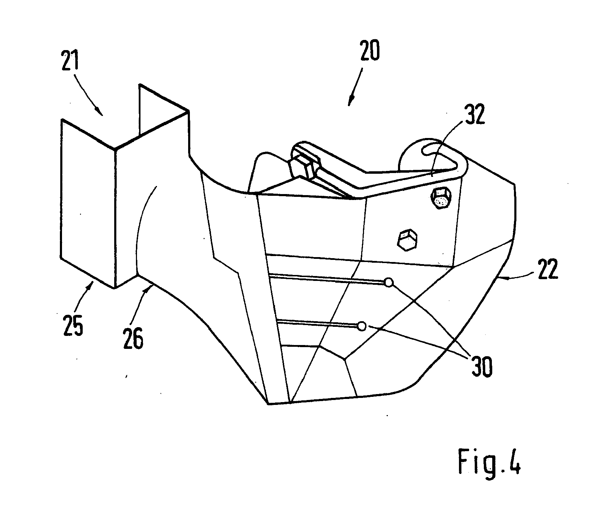

Fig. 4 zeigt das Verbindungselement 20 vom Fahrzeugheck in Richtung der Fahrzeugfront gesehen. In dieser Ansicht ist das im Verbindungselement integrierte Verdecklager 30 zu erkennen, an dem das Verdeck drehbar angelenkt wird. In das Verdeck eingeleitete Querkräfte sowie insbesondere die beim Öffnen und Schließen des fahrenden Fahrzeugs auftretende Zugkräfte werden vom Verdecklager 30 aufgenommen und über das Verbindungselement 20 und über dessen Kontaktflächen 22, 25 und 26 in die Fahrzeugkarosserie eingeleitet. Ebenso ist hier ein Gurtumlenkhebel 32, der im Falle eines Aufpralls ebenfalls hohe Kräfte in den Fahrzeugaufbau einleitet, gezeigt.

## Patentansprüche

1. Kraftfahrzeug mit einer Überrollbügelanordnung, welche wenigstens einen Überrollbügel (11), eine Querstrebe (12) und ein Verbindungselement (20) mit einer Aufnahmeöffnung (21) umfasst, in der ein Ende des Überrollbügels aufgenommen ist, **dadurch gekennzeichnet, dass** ein Ende der Querstrebe (12) in dieser Aufnahmeöffnung (21) aufgenommen ist.

2. Kraftfahrzeug nach Anspruch 1, **dadurch gekennzeichnet, dass** die Aufnahmeöffnung (21) nach oben und in Richtung der Fahrzeugquerachse offen ist.

3. Kraftfahrzeug nach mindestens einem der Ansprüche 1 oder 2, **dadurch gekennzeichnet, dass** der Überrollbügel (11) U-förmig ist.

4. Kraftfahrzeug insbesondere nach Anspruch 1, mit einem Verbindungselement (20) an welchem eine Querstrebe (12) und ein Ende eines Überrollbügels (11) angeordnet sind, **dadurch gekennzeichnet, dass** sich das Verbindungselement (20) an einer äußeren und einer inneren Karosseriewand abstützt.

5. Kraftfahrzeug nach Anspruch 4, **dadurch gekennzeichnet, dass** die innere Karosseriewand, an der sich das Verbindungselement (20) abstützt, im Wesentlichen vertikal und/ oder im Wesentlichen horizontal ist.

6. Kraftfahrzeug nach mindestens einem der Ansprüche 4 oder 5, **dadurch gekennzeichnet, dass** das Verbindungselement (20) mit der inneren und/ oder äußeren Karosseriewand lösbar verbunden ist.

7. Kraftfahrzeug nach mindestens einem der Ansprüche 4 oder 5, **dadurch gekennzeichnet, dass** das Verbindungselement (20) mit der inneren und/ oder äußeren Karosseriewand unlösbar verbunden ist.

8. Kraftfahrzeug nach einem der vorhergehenden Ansprüche, **dadurch gekennzeichnet, dass** am Verbindungselement (20) ein faltbares Verdeck angelenkt ist.

9. Kraftfahrzeug nach einem der vorhergehenden Ansprüche, **dadurch gekennzeichnet, dass** das Verbindungselement (20) wenigstens eine Lagerstelle aufweist, an welcher ein Gurtumlenkhebel (32) angeordnet ist.

10. Kraftfahrzeug nach einem der vorhergehenden Ansprüche, **dadurch gekennzeichnet, dass** das Verbindungselement (20) als zusammengesetztes Bauteil, insbesondere als Schweißkonstruktion, als Umformteil, insbesondere als Schmiedeteil, oder als Urformteil, insbesondere als Gussteil ausgeführt ist.
